# EUROPEAN PATENT SPECIFICATION

(11) **EP 1 280 421 B1**
(45) Date of publication and mention of the grant of the patent: **09.11.2005**
(21) Application number: 01929134.3
(22) Date of filing: 08.05.2001
(51) Int. Cl.: A23L 2/02, A23L 2/46

(54) **TREATMENT PROCESS OF CITRUS JUICE "IN NATURA" FOR BULK STORAGE**
BEHANDLUNGSVERFAHREN VON ZITRUSFRUCHTSÄFTEN "IN NATURA" FÜR SPEICHERUNG
PROCEDE DE TRAITEMENT DES JUS D'AGRUMES A L'ETAT NATUREL POUR LEUR STOCKAGE EN VRAC.

(30) Priority: 11.05.2000 BR 0017892
(43) Date of publication of application: 05.02.2003
(73) Proprietor: Citrosuco Paulista S/A., CEP-15990-020 Matao, SP (BR)
(72) Inventor: DE MORAES, Ricardo, Ermirio, CEP-15990-020 Matao, SP (BR)
(74) Representative: Held, Stephan
(86) International application number: PCT/BR2001/000060
(87) International publication number: WO 2001/084964

(56) References cited:
- US-A- 5 468 508
- US-A- 5 614 238
- US-A- 6 007 863

## Description

### Field of the Invention

The present invention refers to a treatment process of citrus juice "in natura", particularly orange juice, which allows the bulk storage thereof for a relatively long period of time, before said juice is shipped and distributed to different consumer markets.

### Background of the Invention

As it is well known, the bulk storage of orange juice, which will be transported to different consumer markets, either in the same country where it is extracted, or abroad, is achieved with the product already concentrated and frozen at about -10°C. The concentration of the product and the low temperature in which it is handled, shipped and stored, create conditions that avoid deterioration of the product for relatively long periods of time, even under less severe requirements. The product may therefore be shipped and bulk stored in large quantities and then progressively diluted for consumption, according to the demand of the different consumer markets.

The juice is concentrated and then frozen at about - 10°C, resulting in a viscous product in the form of a syrup, which may be pumped, transported and stored for long periods of time with reduced risk of bacteriological contamination and consequent deterioration, thereby simplifying the plants and equipments and maintaining the cost at low levels. However, this concentrated frozen juice has the inconvenience of undergoing a substantial alteration of flavor in relation to the juice "*in natura*", thus having a quality level inferior to the fresh juice.

There are also known other treatment processes for the transportation and storage of orange juice necessarily including the use of containers, such as drums and hermetic bags, which are not considered a bulk system and present higher costs, mainly in cases where large quantities of the product are exported.

It is also known the process of using drums to freeze the juice "in natura" packed in plastic bags.

US6007863 discloses a process where clarified, pasteurized juice is filled into bulk storage packaging and stored in frozen or nearly frozen state, isolated or not frozen air.

### Disclosure of the Invention

Thus, it is a general object of the present invention to provide a treatment process of citrus juice "*in natura*" for bulk storage, which, by using economically viable means for handling, shipping and storing, allows the juice with the same characteristics of the juice "*in natura*" to be delivered to different consumer markets in different countries.

In order to achieve the objective above, the present treatment process comprises the steps of: submitting the extracted, filtered and centrifuged juice to an effective pasteurization at about 100°C for its complete bacteriological sterilization; chilling the effectively pasteurized juice to a preservation temperature as close to the freezing point of the product as possible, without however causing freezing thereof, maintaining it in an aseptic environment; aseptically conducting the effectively pasteurized and cooled juice to at least one tank of bulk storage having a pressurized, inert and aseptic internal environment; and maintaining the juice stored in the preservation temperature.

The present treatment process, defined above in general terms, allows the bulk storage for relatively long periods of time, such as about one year, of large quantities of citrus juice "in natura", particularly orange juice, in conditions of high quality in terms of original flavor and properties, in situations in which said storage tanks are located sufficiently close to the juice extraction site, in order to allow said juice to be received directly from the extraction place and submitted to the effective pasteurization.

In situations in which the storage tanks are located far from the extraction site, requiring transportation of the juice by a long distance, the present process includes the additional step of submitting the juice to a slight pasteurization, in order to stop the enzymatic activity in the juice before the latter is chilled to said preservation temperature, before being conducted to the effective pasteurization step.

### Brief Description of the Drawings

The invention will be described below, with reference to the attached drawings, in which:
Figure 1 illustrates, schematically, a diagram of the steps of extracting, filtering, centrifuging and initial treatment of the juice, which will subsequently be conducted to the place where it will receive treatment for storage, according to a possible way of carrying out the process of the present invention; and

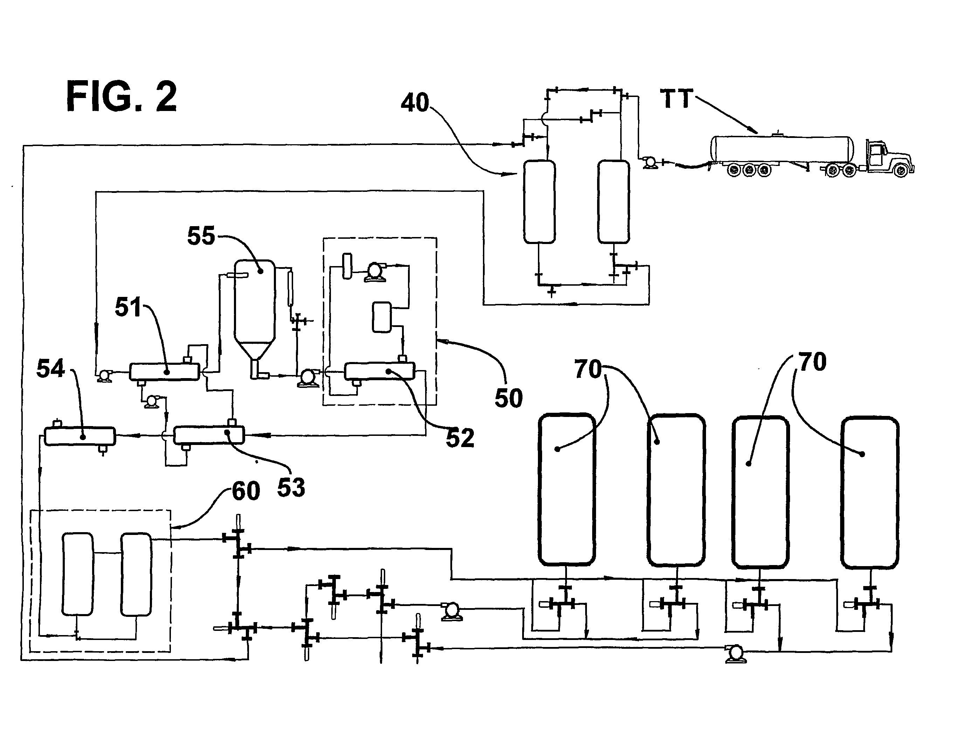

Figure 2 is a diagram similar to that of the previous figure, but illustrating the subsequent steps of the process.

### Detailed Description of the Treatment Process

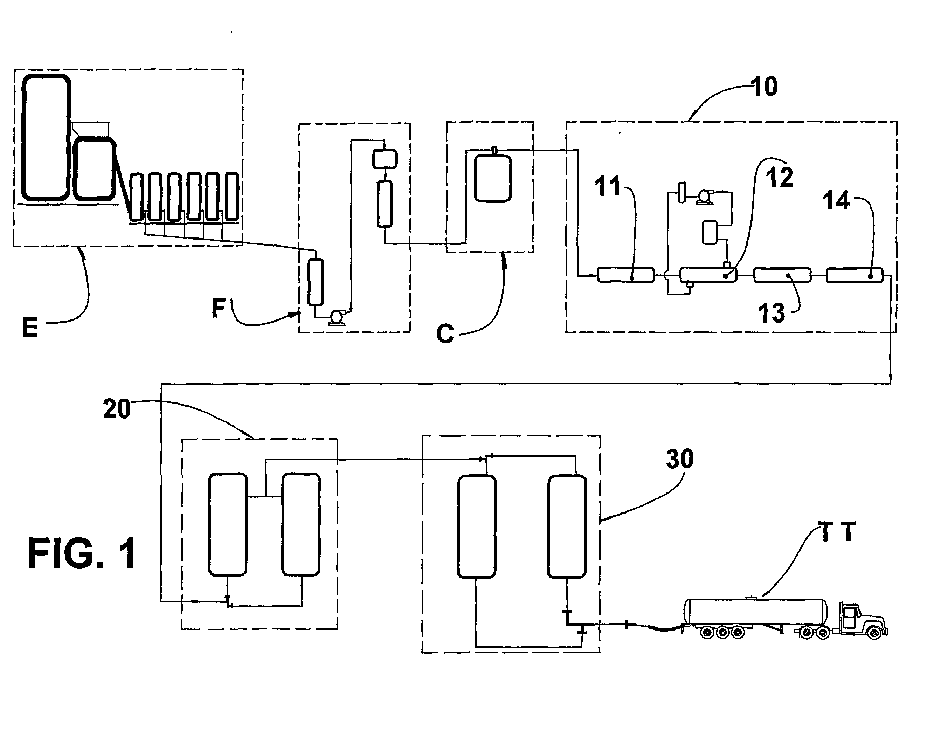

According to figure 1, the present treatment process is applied to a citrus juice, in this example orange juice, which is submitted to the extracting, filtering and centrifuging steps in respective extracting, filtering and centrifuging units E, F and C.

According to the invention, the already centrifuged juice "*in natura*" is conducted to a slight pasteurization unit 10, and thence to a cooling unit 20, wherefrom it is supplied to a plurality of surge tanks 30, from which it is pumped to the inside of tank trucks TT, which take the juice to the place where it will remain stored before its transportation to the consumer market. In the example considered herein, this storage place is defined as a port facility.

The slight pasteurization is achieved by submitting the juice to a temperature of about 77°C, sufficient to stop the enzymatic activity in the juice being treated. In the illustrated example, the slight pasteurization is achieved by submitting the juice to a regenerator 11 at about 25°C, then to a heater 12 at about 77°C, to be then submitted first to a cooler 13, reducing the temperature of the juice to about 44°C, and then to a final cooler 14, which reduces the temperature close to the freezing point.

The slightly pasteurized juice, leaving the slight pasteurization unit 10 is conducted, under conditions with a certain degree of asepsis, to a cooling unit 20, where it will be chilled to a preservation temperature, as close to the freezing point as possible, without however freezing said juice. In the case of orange juice, the preservation temperature mentioned above is of about -1.7°C.

In the example illustrated in the drawings, the storage of the juice *"in natura",* to be distributed to the market, is carried out in a location far from the extraction site. In this case, after being submitted to the preservation temperature, the slightly pasteurized juice is conducted to transportation tanks mounted to tank trucks and having an internal environment, which is maintained inert, pressurized with nitrogen or other adequate inert gas.

The juice conducted to the tank trucks TT is maintained at the preservation temperature and transported to the storage site, where it is discharged from the tank truck TT and conducted to an effective pasteurization unit 50, in which it is pasteurized at a temperature of about 100°C for a complete bacteriological sterilization of the product. The effective pasteurization unit 50 may be constructed in the same way as the slight pasteurization unit 10, by only varying the temperature values of the product being treated, which are of about 45°C in the regenerator 51, 100°C in the heater 52, 97.5°C in the cooler 53 and 0°C in the final cooler 54. Between the regenerator 51 and the heater 52, a de-aerator 55 is provided.

The effectively pasteurized juice is then chilled to said preservation temperature in a cooling unit 60, the construction of which being usually the same as the cooling unit 20 located downstream the slight pasteurization unit 10.

In order to facilitate the operations, the juice discharged from the tank truck TT may be conducted to a plurality of surge tanks, similar to the surge tanks 30 used during the step of feeding said trucks with the slightly pasteurized juice.

The effectively pasteurized and cooled juice is then aseptically conducted to at least one storage tank 70, which has an inert and aseptic internal environment and whose load is maintained at said preservation temperature.

## Claims

1. Treatment process of citrus juice "*in natura*" for bulk storage, **characterized in that** it comprises the steps of: - submitting the extracted, filtered and centrifuged juice to an effective pasteurization at about 100°C for its complete bacteriological sterilization;
- chilling the effectively pasteurized juice to a preservation temperature as close to the freezing point of the product as possible, without however causing freezing thereof, maintaining it in an aseptic environment;
- aseptically conducting the effectively pasteurized and cooled juice to at least one tank of bulk storage having an aseptic internal environment pressurized with an inert gas; and
- maintaining the juice stored at the preservation temperature.

2. Treatment process, according to claim 1, **characterized in that** the preservation temperature is of about -1.7°C.

3. Treatment process, according to claim 1, the juice being stored in at least one tank in a place distant from the extraction site, **characterized in that** it further comprises the intermediate steps of:
- submitting the extracted, filtered and centrifuged juice to a slight pasteurization at about 77°C, in order to stop any enzymatic activity in the juice;
- chilling the slightly pasteurized juice to said preservation temperature, maintaining it in an environment pressurized with an inert gas;
- transferring the slightly pasteurized and cooled juice to tanks of bulk transportation, with an environment pressurized with inert gas and cooled, in order to maintain the juice contained therein in a preservation temperature;
- transporting the juice to the location of the storage tanks, maintaining it at the preservation temperature and pressurized with inert gas; and
- conducting the juice "*in natura*" in bulk from the transportation tanks to the effective pasteurization step.

4. Treatment process, according to claim 3, **characterized in that** the transportation tanks which carry the slightly pasteurized juice in bulk are mounted to transportation vehicles.

5. Treatment process, according to claim 3, **characterized in that** the slightly pasteurized juice, cooled to the preservation temperature, is conducted to surge tanks before being sent to transportation tanks and re-conducted to a plurality of surge tanks upon being discharged from the transportation tanks.

6. Treatment process, according to any one of the previous claims, **characterized in that** the inert gas is nitrogen.

## Patentansprüche

1. Behandlungsverfahren für Zitrusfruchtsaft "in Natura" zur Massenlagerung, **dadurch gekennzeichnet, dass** es die folgenden Schritte umfasst:
- Unterwerfen des extrahierten, filtrierten und zentrifugierten Fruchtsafts einer wirksamen Pasteurisierung bei etwa 100° C bis zu seiner vollständigen bakteriologischen Sterilisation;
- Abschrecken des wirksam pasteurisierten Fruchtsafts auf eine Konservierungstemperatur, die dem Gefrierpunkt des Produkts möglichst nahe kommt, ohne allerdings ein Gefrieren desselben zu bewirken, während es in einer aseptischen Umgebung gehalten wird;
- aseptisches Leiten des wirksam pasteurisierten und gekühlten Fruchtsafts zu wenigstens einem Tank zur Massenlagerung, der eine aseptische innere Umgebung hat, die mit einem Inertgas unter Druck gesetzt ist; und
- Halten des Fruchtsafts bei der Konservierungstemperatur während des Lagerns.

2. Behandlungsverfahren nach Anspruch 1, **dadurch gekennzeichnet, dass** die Konservierungstemperatur etwa -1,7° C ist.

3. Behandlungsverfahren nach Anspruch 1, wobei der Fruchtsaft in wenigstens einem Tank an einer Stelle, die sich von der Extraktionsstelle entfernt befindet, gelagert wird, **dadurch gekennzeichnet, dass** es außerdem die folgenden Zwischenschritte umfasst:
- Unterwerfen des extrahierten, filtrierten und zentrifugierten Fruchtsafts einer leichten Pasteurisierung bei etwa 77° C, um eine enzymatische Aktivität in dem Fruchtsaft zu stoppen;
- Abschrecken des leicht pasteurisierten Fruchtsafts auf die Konservierungstemperatur, Halten desselben in einer mit einem Inertgas unter Druck gesetzten Umgebung;
- Transferieren des leicht pasteurisierten und gekühlten Fruchtsafts in Tanks zum Massentransport mit einer mit einem Inertgas unter Druck gesetzten und gekühlten Umgebung, um den darin enthaltenen Fruchtsaft bei einer Konservierungstemperatur zu halten;
- Transportieren des Fruchtsafts zu dem Ort der Lagertanks, wobei er bei der Konservierungstemperatur und mit Inertgas unter Druck gehalten wird; und
- Leiten des Fruchtsafts "in Natura" in Masse aus den Transporttanks zum Schritt der wirksamen Pasteurisierung.

4. Behandlungsverfahren nach Anspruch 3, **dadurch gekennzeichnet, dass** die Transporttanks, die den leicht pasteurisierten Fruchtsaft in Masse tragen, auf Transportfahrzeuge montiert sind.

5. Behandlungsverfahren nach Anspruch 3, **dadurch gekennzeichnet, dass** der leicht pasteurisierte Fruchtsaft, der auf die Konservierungstemperatur gekühlt ist, zu Zwischentanks geleitet wird, bevor er zu Transporttanks geschickt wird, und zu einer Vielzahl von Zwischentanks zurückgeleitet wird, wenn er aus den Transporttanks entladen wird.

6. Behandlungsverfahren nach einem der vorangehenden Ansprüche, **dadurch gekennzeichnet, dass** das Inertgas Stickstoff ist.

## Revendications

1. Procédé de traitement de jus d'agrumes "à l'état naturel" pour un stockage en vrac, **caractérisé en ce qu'**il comprend les étapes qui consistent :
- à soumettre le jus extrait, filtré et centrifugé à une pasteurisation effective à environ 100°C pour sa stérilisation bactériologique complète ;
- à refroidir rapidement le jus effectivement pasteurisé à une température de conservation aussi proche que possible du point de congélation du produit, sans cependant provoquer sa congélation, le maintenant dans un environnement aseptique ;
- à conduire dans des conditions aseptiques le jus effectivement pasteurisé et refroidi à au moins un réservoir de stockage en vrac ayant un environnement intérieur aseptique, mis sous pression avec un gaz inerte ; et
- à maintenir le jus stocké à la température de conservation.

2. Procédé de traitement selon la revendication 1, **caractérisé en ce que** la température de conservation est d'environ - 1,7°C.

3. Procédés de traitement selon la revendication 1, dans lequel le jus est stocké dans au moins un réservoir en un emplacement éloigné du site d'extraction, **caractérisé en ce qu'**il comprend en outre les étapes intermédiaires qui consistent :
- à soumettre le jus extrait, filtré et centrifugé à une légère pasteurisation à environ 77°C, afin d'arrêter toute activité enzymatique dans le jus ;
- à refroidir rapidement le jus légèrement pasteurisé à ladite température de conservation, le maintenant dans un environnement mis sous pression avec un gaz inerte ;
- à transférer le jus légèrement pasteurisé et refroidi à des réservoirs de transport en vrac, avec un environnement mis sous pression avec un gaz inerte et refroidi, afin de maintenir le jus qu'ils contiennent à une température de conservation ;
- à transporter le jus à l'emplacement des réservoirs de stockage, en le maintenant à la température de conservation et sous pression avec un gaz inerte ; et
- à conduire le jus "à l'état naturel" en vrac des réservoirs de transport jusqu'à l'étape de pasteurisation effective.

4. Procédé de traitement selon la revendication 3, **caractérisé en ce que** les réservoirs de transport qui portent en vrac le jus légèrement pasteurisé sont montés sur des véhicules de transport.

5. Procédé de traitement selon la revendication 3, **caractérisé en ce que** le jus légèrement pasteurisé, refroidi à la température de conservation, est conduit à des réservoirs d'équilibrage avant d'être envoyé à des réservoirs de transport et est reconduit à plusieurs réservoirs d'équilibrage lorsqu'il est déchargé des réservoirs de transport.

6. Procédé de traitement selon l'une quelconque des revendications précédentes, **caractérisé en ce que** le gaz inerte est de l'azote.
